# FASCICULE DE BREVET EUROPEEN

(11) **EP 2 687 633 B1**
(45) Date de publication et mention de la délivrance du brevet: **21.01.2015**
(21) Numéro de dépôt: 13354024.5
(22) Date de dépôt: 05.07.2013
(51) Int. Cl.: F16K 15/02, F16K 15/14, E02D 31/12

(54) **Dispositif anti-retour de sécurité pour un fond de bassin**
Sicherheitsrückschlagvorrichtung für einen Beckenboden
Safety non-return device for the bottom of a pond

(30) Priorité: 16.07.2012 FR 1202014
(43) Date de publication de la demande: 22.01.2014
(73) Titulaire: Norham, 26260 Saint-Donat-sur-l'Herbasse (FR)
(72) Inventeur: Turner, David, 26260 Marsaz (FR); Michel, François, 26260 Saint Donat (FR); Lamberton, Mikaël, 26260 Arthemonay (FR); Pally, Sébastien, 26100 Romans (FR)
(74) Mandataire: Talbot, Alexandre

(56) Documents cités:
- DE-C- 181 860
- DE-C1- 10 044 823
- FR-A1- 2 919 037

## Description

### Domaine technique de l'invention

L'invention se rapporte au domaine des bassins creusés dans le sol. Plus précisément, l'invention concerne un dispositif anti-retour de sécurité pour un fond d'un bassin dans un sol pouvant être le siège de pressions hydrostatiques susceptibles de pousser sur ce fond. Etant à même d'interdire un écoulement de fuite dans un premier sens, depuis le bassin vers le sol, et d'autoriser un écoulement de remplissage dans un deuxième sens contraire au premier sens, le type de dispositif anti-retour de sécurité en question comporte :
- un corps comportant des ouvertures de mise en communication pour le passage de l'écoulement de remplissage, et
- une membrane souple portée par le corps et déformable, sous la poussée d'une pression hydrostatique dans le sol, depuis une configuration de fermeture, dans laquelle cette membrane souple ferme de manière étanche lesdites ouverture de manière à interdire l'écoulement de fuite, jusqu'à une configuration passante, dans laquelle l'écoulement de remplissage est autorisé en traversant le corps par les ouvertures de mise en communication

### État de la technique

De nombreux bassins creusés dans le sol sont destinés à retenir de l'eau propre ou chargée d'éléments divers. Parmi de tels bassins figurent les piscines, les réservoirs de rétention d'eau, ainsi que les bassins de station d'épuration. Selon sa fonction, un bassin peut parfois posséder un fond très étendu, qui peut comporter une dalle de béton prolongée par des parois latérales montantes.

Le sol entourant un bassin peut être le siège d'importantes pressions hydrostatiques, qui peuvent par exemple résulter de remontées d'eau depuis des nappes phréatiques sous-jacentes. Tant que le bassin est plein, la pression hydrostatique due à l'eau présente à l'intérieur du bassin contrebalance les éventuelles pressions hydrostatiques régnant dans le sol. Tel n'est plus le cas lorsque, pour une raison ou pour une autre, le bassin est vidé. C'est pourquoi il peut arriver que le fond d'un bassin vidé temporairement se rompe ou s'endommage d'une autre manière. Les dégâts causés dans de telles circonstances sont d'autant plus préjudiciables qu'ils peuvent se traduire par des frais de remise en état conséquents et, parfois, par une indisponibilité du bassin jusqu'à la réalisation de réparations.

Afin de lutter contre le risque d'endommagement d'un fond de bassin par des pressions hydrostatiques dans le sol alentour, on a imaginé des dispositifs anti-retour de sécurité du type précité, que l'on monte devant des passages ménagés dans le fond de bassin à protéger. Le brevet français FR 2 919 037 propose un dispositif anti-retour de sécurité du type précité, qui est à même d'interdire un écoulement de fuite depuis le bassin vers le sol, tout en autorisant un écoulement de remplissage du bassin dans le sens contraire, notamment lorsque le bassin a été vidé de son contenu et que des pressions hydrostatiques règnent dans le sol autour de ce bassin.

Le plus fréquemment, l'eau entrant dans le bassin depuis le sol par un dispositif anti-retour de sécurité entraîne avec elle des particules solides. Si, lorsque le niveau de la nappe phréatique est redescendu, de telles particules solides peuvent avoir été piégées dans le dispositif anti-retour de sécurité de manière à nuire à son étanchéité, une intervention humaine visant à l'évacuation de ces particules solides doit être planifiée et menée avant tout nouveau remplissage du bassin, ce qui est contraignant et couteux. Pour être véritablement satisfaisant, un dispositif anti-retour de sécurité doit posséder un fonctionnement robuste eu égard au risque de voir son étanchéité contre un écoulement de fuite être rendue imparfaite, notamment par des particules solides ayant été entraînées par un écoulement de remplissage. A cet égard, le dispositif anti-retour de sécurité décrit dans le brevet français précité FR 2 919 037 présente un progrès par rapport à un clapet de décharge proposé dans le brevet français FR 2 056 253.

Une remontée d'eau depuis une nappe phréatique sous-jacente peut être très rapide. Lorsque tel est le cas, le remplissage du bassin par les dispositifs anti-retour de sécurité équipant le fond de ce bassin doit également être rapide, faute de quoi ce remplissage peut être impuissant à s'opposer à une détérioration du fond du bassin.

Lorsqu'il est dimensionné pour pouvoir s'opposer de manière fiable à un écoulement de fuite vers le sol, un dispositif anti-retour de sécurité d'une conception donnée ne peut laisser passer qu'un certain débit d'eau dans le sens de remplissage d'un bassin, pour une différence de pression motrice donnée dans ce sens de remplissage. Ce débit d'eau détermine le nombre minimal de dispositifs anti-retour de sécurité à installer par unité de surface sur un fond de bassin, pour que ce fond de bassin soit convenablement protégé en cas de montée rapide du niveau de l'eau dans le sol entourant le bassin. Du fait du coût d'un dispositif anti-retour de sécurité et de son coût d'installation, on souhaite pouvoir réduire le nombre minimal de dispositifs anti-retour de sécurité à installer par unité de surface sur un fond de bassin, c'est-à-dire la densité minimale de dispositifs anti-retour de sécurité à prévoir sur un fond de bassin pour que ce fond soit convenablement protégé.

Pouvoir s'opposer de manière fiable à un écoulement de fuite vers le sol et pouvoir laisser passer un débit important d'eau dans le sens d'un remplissage du bassin, pour une différence de pression motrice donnée dans ce sens, constituent deux contraintes antagonistes que doit pouvoir satisfaire simultanément un dispositif anti-retour de sécurité permettant de réduire la densité minimale de dispositifs anti-retour de sécurité à prévoir pour qu'un fond de bassin soit convenablement protégé.

### Résumé de l'invention

L'invention a au moins pour but de permettre une réduction de la densité minimale de dispositifs anti-retour de sécurité à prévoir pour qu'un fond de bassin soit convenablement protégé.

Selon l'invention, ce but est atteint grâce à un dispositif anti-retour qui est du type précité et qui comporte :
- un volet annulaire déporté par rapport aux ouvertures de mise en communication et basculant entre une position rabattue, dans laquelle ce volet annulaire de la membrane souple dans sa configuration d'obturation s'applique de manière étanche sur le corps, et une position ouverte dans laquelle le volet annulaire de la membrane souple dans sa configuration passante est à l'écart du corps, et
- une portion de fermeture non basculante par rapport au corps, distincte du volet annulaire et recouvrant les ouvertures de mise en communication de manière à pouvoir fermer hermétiquement ces ouvertures de mise en communication, dans la configuration d'obturation, et être éloigné des ouvertures de mise en communication sous la poussée de la pression hydrostatique, dans la configuration passante.

La portion de fermeture et le volet annulaire font partie d'une même paroi sous laquelle l'écoulement de remplissage peut cheminer depuis les ouvertures de communication jusqu'au niveau d'un bord libre du volet annulaire, lorsque la membrane souple est dans sa configuration passante.

Le dispositif anti-retour de sécurité défini ci-dessus peut être tel qu'il puisse s'opposer de manière fiable à un écoulement de fuite vers le sol, tout en pouvant laisser passer un débit important d'eau dans le sens d'un remplissage d'un bassin, pour une différence de pression motrice donnée dans ce sens.

Un dispositif anti-retour tel que défini plus haut peut incorporer une ou plusieurs autres caractéristiques avantageuses, isolément ou en combinaison, en particulier parmi celles définies ci-après.

Avantageusement, le corps comporte :
- une bride de montage,
- une portion centrale en saillie par rapport à la bride de montage, et
- une paroi annulaire raccordant la bride de montage à la portion centrale, cette paroi annulaire étant percée des ouvertures de mise en communication et étant entourée de la portion de fermeture constitutive de la membrane souple.

Avantageusement, la portion de fermeture est serrée élastiquement sur la paroi annulaire du corps.

Avantageusement, au niveau de la portion de fermeture, la membrane souple comporte une succession de nervures annulaires de rappel élastique de cette portion de fermeture vers la paroi annulaire du corps.

Avantageusement, le volet annulaire se trouve au niveau de la portion centrale du corps de manière à s'étendre devant cette portion centrale lorsque ce volet annulaire est dans sa position rabattue.

Avantageusement, la membrane souple comporte une portion annulaire de retenue qui recouvre au moins partiellement une face arrière de la bride de montage de manière à être serrée entre cette bride de montage et le fond du bassin lorsque le dispositif anti-retour de sécurité est fixé à ce fond.

Avantageusement, le volet annulaire possède une raideur élastique se traduisant par un rappel élastique de lui-même vers sa position rabattue. De préférence, le volet annulaire comporte une succession de rainures, décalées angulairement, d'abaissement de la raideur élastique en allongement parallèlement au bord libre du volet annulaire.

Avantageusement, entre la portion de fermeture et le volet annulaire, la membrane souple comporte une portion de plus grande flexibilité définissant une charnière annulaire autour de laquelle le volet annulaire est basculant.

Avantageusement, au niveau de la charnière, la membrane souple comporte au moins une zone amincie de flexibilisation de la charnière. Cette zone amincie s'étend selon une même courbe fermée que la charnière.

Avantageusement, en aval des ouvertures de mise en communication, selon le deuxième sens, le corps délimite un creux formant au moins une partie d'une cavité d'évacuation de l'écoulement de remplissage vers le volet annulaire. Cette cavité est délimitée par le corps et la membrane souple.

Avantageusement, le volet annulaire porte au moins une lèvre d'étanchéité annulaire s'appliquant sur le corps de manière étanche lorsque le volet annulaire est dans sa position rabattue. Cette lèvre d'étanchéité annulaire longe un bord libre du volet annulaire.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, parmi lesquels :
- la figure 1 est une vue en perspective d'un dispositif anti-retour de sécurité conforme à l'invention,
- la figure 2 est une vue éclatée, en perspective, du dispositif anti-retour de sécurité représenté à la figure 1,
- la figure 3 est une vue en coupe axiale représentant une moitié d'une membrane souple constitutive du dispositif anti-retour de sécurité des figures 1 et 2,
- la figure 4 est une vue en coupe selon le plan IV de la figure 1 et représente le dispositif anti-retour de sécurité des figures 1 et 2, ainsi qu'une portion d'un bassin ayant un fond équipé de ce dispositif anti-retour de sécurité, dont la membrane souple est dans une configuration de fermeture interdisant un écoulement de fuite depuis le bassin,
- la figure 5 est une vue de détail résultant d'un agrandissement de la fenêtre notée V à la figure 4,
- la figure 6 est une vue de détail résultant d'un agrandissement de la fenêtre notée VI à la figure 4, et
- la figure 7 est une vue en coupe qui est analogue à la figure 4 et sur laquelle la membrane souple du dispositif anti-retour de sécurité des figures 1 et 2 est dans une configuration passante et autorise un écoulement de remplissage vers le bassin, depuis le sol, sous l'effet d'une pression hydrostatique dans ce sol.

### Description d'un mode préférentiel de l'invention

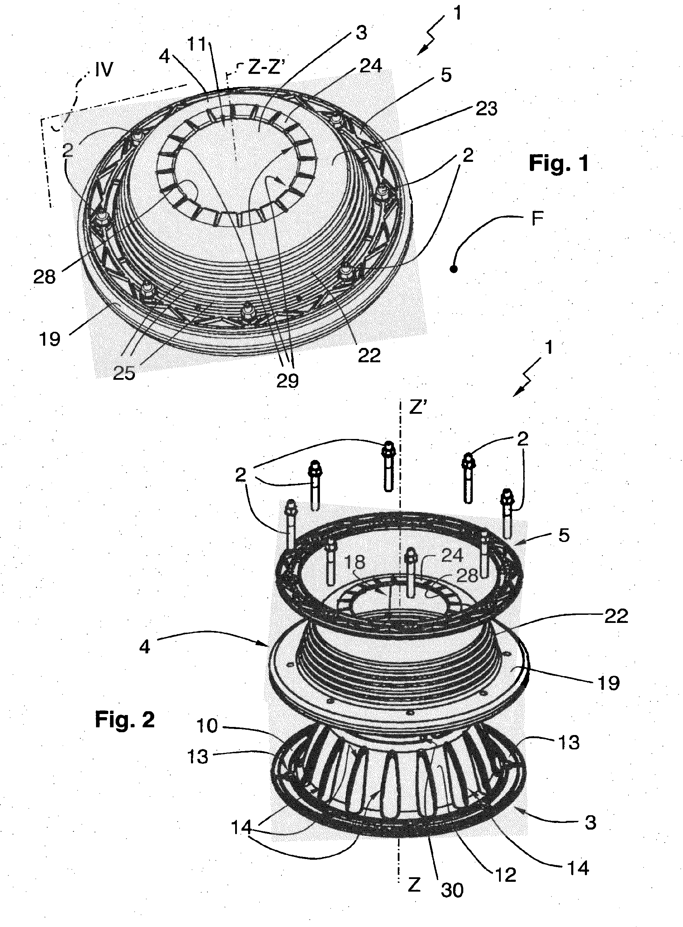

Sur la figure 1, un dispositif anti-retour de sécurité 1 conforme à l'invention est fixé au moyen d'un jeu de vis de serrage 2, contre le fond F d'un bassin creusé dans un sol. A titre d'exemples, ce bassin peut être une piscine, un réservoir de rétention d'eau ou un bassin de station d'épuration.

Comme on peut bien le voir à la figure 2, le dispositif anti-retour de sécurité 1 est un assemblage de plusieurs éléments, dont un corps rigide 3 et une membrane souple 4 montée sur ce corps 3 et élastiquement déformable. Le corps 3 et la membrane souple 4 s'étendent chacun globalement selon une surface de révolution d'axe Z-Z'. Ils forment un sous-ensemble qu'un anneau de bridage 5 est destiné à retenir et serrer contre le fond F, en étant lui-même serré vers ce fond F par les vis 2.

Le corps 3 comporte une embase annulaire ou bride de montage 10 et une portion centrale 11 (visible à la figure 1), qui sont décalées l'une de l'autre selon l'axe Z-Z' et raccordées l'une à l'autre par une paroi annulaire 12. La bride de montage 10 est percée de trous 13 pour le passage des vis 2. La paroi annulaire 12 et la portion centrale 11 constituent ensemble une forme semblable à un dôme s'élevant à partir de la bride de montage 10. Ce dôme est étanche à l'eau sauf au niveau d'une succession d'ouvertures de mise en communication 14, qui traversent de part en part la paroi annulaire 12. Décalés angulairement entre elles autour de l'axe de révolution Z-Z', les ouvertures 13 sont oblongues de manière à s'étendre sur la majeure partie de la largeur de la paroi annulaire 12.

Le corps 3 est moulé en un matériau rigide, de préférence résistant aux agressions chimiques. De préférence, ce matériau rigide est une matière plastique injectée, par exemple un polyamide (PA) ou un polymère de la famille des polyesters. Préférentiellement, le corps 3 est moulé en polypropylène (PP), par injection.

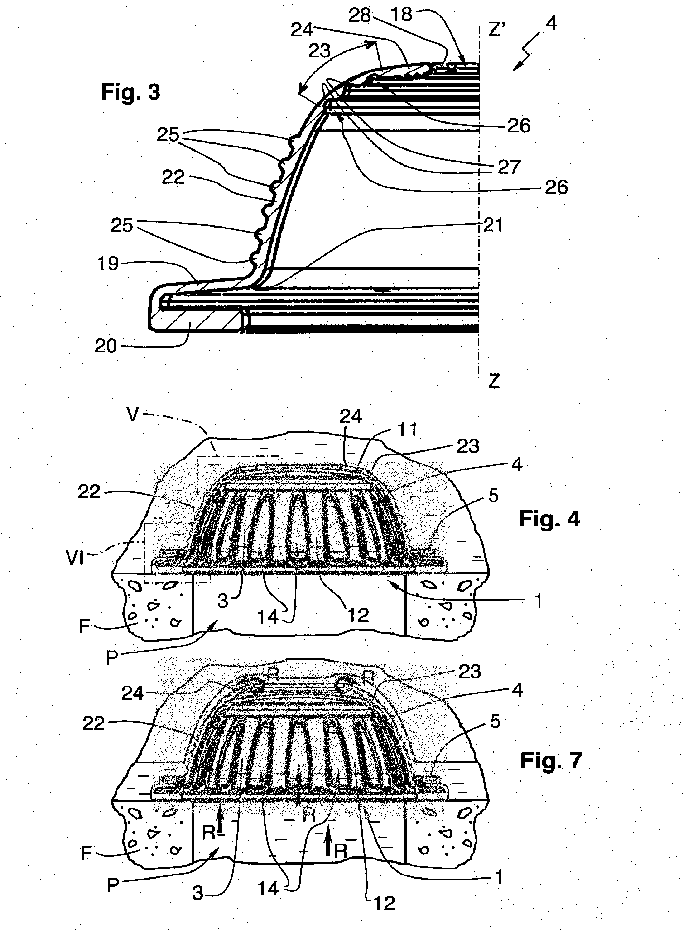

Ainsi qu'on bien le voir à la figure 3, la membrane souple 4 est prévue pour recouvrir et épouser la surface externe du corps 3. Elle a une forme générale globalement semblable à cette surface externe sauf qu'elle est percée d'un passage central 18 centré sur l'axe de révolution Z-Z'.

La membrane souple 4 comporte une couronne creuse de retenue 19, qui est prévue pour se clipper sur la bride de montage 10 et délimite à cet effet une rainure annulaire 21 de réception de cette bride de montage 10. La portion arrière de la couronne creuse de retenue 19 est plus précisément une portion annulaire de retenue 20 destinée à être serrée par la bride de montage 10 sur un fond de bassin.

Dans le présent texte et dans les revendications annexées, les termes « arrière » et « avant » considèrent le dispositif anti-retour de sécurité tel que vu depuis le bassin, une fois en place. Par exemple, la face avant du dispositif anti-retour de sécurité 1 est celle que l'on voit depuis l'intérieur d'un bassin dont le fond est équipé de ce dispositif anti-retour de sécurité 1. Toujours au sens où on entend les termes « avant » et « arrière», la face arrière du dispositif anti-retour de sécurité 1 est celle destinée à être tournée vers un passage percé dans le fond d'un bassin.

Une portion 22 de fermeture des ouvertures de mise en communication 14 raccorde la couronne creuse de retenue 19 à une charnière 23, qui raccorde elle-même cette portion de fermeture 22 à un volet annulaire 24 basculant.

La portion de fermeture 22 peut s'expanser de manière élastique, perpendiculairement à l'axe de révolution Z-Z', sans basculer par rapport au corps 3. Au niveau de sa surface externe, la portion de fermeture 22 porte une succession de nervures annulaires élastiques 25, qui ont pour fonction de la rappeler de manière centripète, vers le corps 3, et de la serrer sur ce corps 3.

Comme le volet annulaire 24, la charnière 23 s'étend circulairement selon une courbe fermée sur elle-même, perpendiculairement à laquelle elle possède une largeur. A mesure que l'on s'éloigne de la portion de fermeture 22 et que l'on se rapproche du volet annulaire 24, la charnière 23 s'infléchit progressivement en direction du passage central 18. Au niveau de la charnière 23, plusieurs gorges circulaires 26 sont ménagées dans la surface arrière de la membrane souple 4. A chaque gorge circulaire 26 correspond une zone amincie 27 de flexibilisation de la charnière 23. Les zones amincies 27 sont écartées les unes des autres selon la largeur de la charnière 23. La charnière 23 est une portion de plus grande flexibilité autour de laquelle le volet annulaire 24 peut basculer.

Le volet annulaire 24 comporte un unique bord libre 28 fermé sur lui-même, expansible, qui entoure et délimite le passage central 18. Le volet annulaire 24 bascule autour de la charnière 23 en s'ouvrant en corole, vers l'avant, de manière élastique, ce qui se traduit par une expansion de son bord libre 28 et un agrandissement de la section de passage du passage central 18. Décalées angulairement entre elles autour de l'axe de révolution Z-Z', des rainures radiales 29 sont ménagées dans la face avant ou face externe du volet annulaire 24 et facilitent l'ouverture de celui-ci en réduisant sa raideur élastique parallèlement au bord libre 28.

De préférence, la membrane souple 4 est moulée en terpolymère d'Éthylène-propylène-diène monomère, encore désigné par l'acronyme EPDM. La membrane souple 4 peut également être réalisée en un autre élastomère thermoplastique ou en tout autre matériau adapté. Préférentiellement, le matériau constitutif de la membrane souple 4 satisfait à la norme européenne EN 681-1 (classe WC). Par exemple, il peut posséder une dureté Shore A de l'ordre de 40 Sh A.

A la figure 4, la membrane souple 4 est montée sur le corps 3. La portion de fermeture 22 recouvre la paroi annulaire 12 et les ouvertures de mise en communication 14, qu'elle ferme de manière étanche. La charnière 23 recouvre la zone d'inflexion où s'effectue la jonction de la paroi annulaire 12 et de la portion centrale 11 l'une à l'autre. Ainsi, le volet annulaire 24 est déporté par rapport aux ouvertures de mise en communication 14, en se trouvant au niveau de la portion centrale 11 du corps 3.

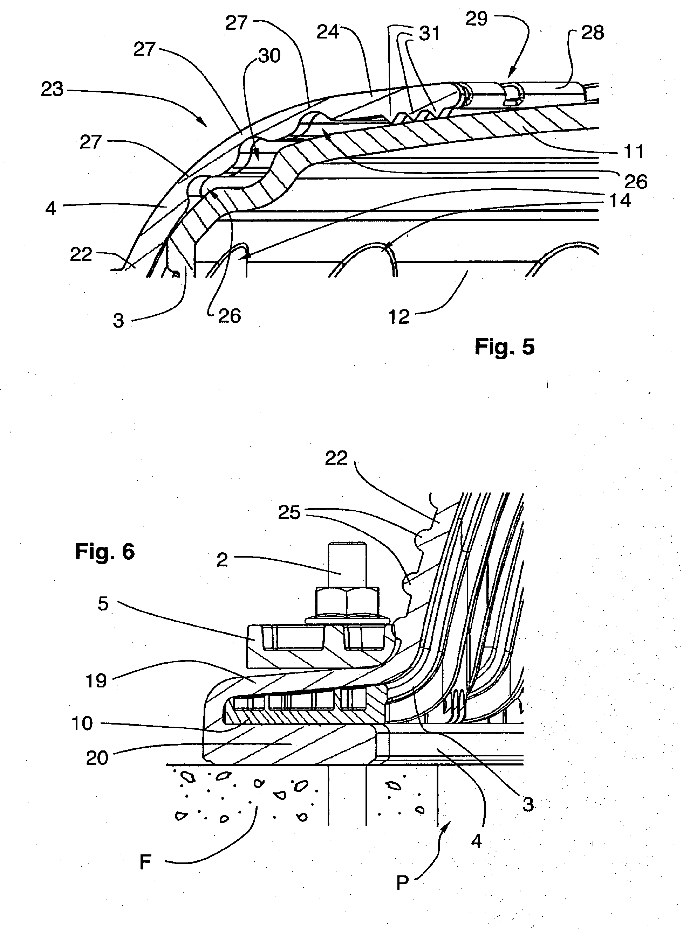

Ainsi qu'on peut bien le voir à la figure 5, la surface avant du corps 3 délimite un creux en forme de gorge annulaire 30, se trouvant à la jonction de la paroi annulaire 12 et de la portion centrale 11, sous la charnière 23. Discontinue dans l'exemple représenté, cette gorge 30 forme tout ou partie d'une cavité que délimite également la membrane souple 4 et qui est destiné à recevoir de l'eau en provenance des ouvertures de mise en communication 14 et à destination du passage central 18.

Encore sur la figure 5, on voit que, du côté de sa face arrière ou face interne, le volet annulaire 24 porte plusieurs lèvres d'étanchéité annulaire 31 s'appliquant sur le corps 3 de manière étanche lorsque le volet annulaire 24 est dans sa position rabattue, c'est-à-dire dans sa position de la figure 5. De préférence au nombre de trois comme dans l'exemple représenté, les lèvres d'étanchéité annulaire 31 entourent le passage central 18 et longent le bord libre 28.

A la figure 4, le dispositif anti-retour de sécurité 1 est fixé devant un passage P de manière à le fermer. Le passage P est percé dans le fond F, jusqu'au sol, non visible, dans lequel est creusé le bassin. Ainsi qu'on peut bien le voir à la figure 6, un serrage de la portion annulaire de retenue 20 entre la bride de montage 10 et le fond F du bassin se cumule avec un serrage de la portion avant de la couronne creuse de retenue 19 entre l'anneau de bridage 5 et la bride de montage 10. Ces deux serrages participent au maintien en place de la membrane souple 4. La portion annulaire de retenue 20 réalise en outre une étanchéité entre le dispositif anti-retour de sécurité 1 et le fond F du bassin.

Toujours à la figure 4, le bassin contient de l'eau dont la masse produit une pression hydrostatique s'appliquant sur la surface avant de la membrane souple 4. Du fait de sa propre force de serrage centripète, la portion de fermeture 22 est plaquée contre le corps 3 et ferme hermétiquement les ouvertures de mise en communication 14. La pression hydrostatique à l'intérieur du bassin agit également dans le sens d'une fermeture des ouvertures de mise en communication 14 par la membrane souple 4. Parallèlement, cette même pression hydrostatique générée dans le bassin plaque le volet annulaire 24 contre le corps 3, dans une position rabattue, dans laquelle les lèvres d'étanchéité annulaire 31 s'appliquent de manière étanche sur la portion centrale 11 de ce corps 3. La membrane souple 4 est alors dans une configuration de fermeture et elle interdit un écoulement de fuite à travers le dispositif anti-retour de sécurité 1, du bassin vers le sol. Dans cette configuration de fermeture, une étanchéité annulaire au niveau des lèvres 31 s'ajoute à la fermeture étanche des ouvertures de mise en communication 14. Cette fermeture étanche est réalisée par la portion de fermeture 22, c'est-à-dire par une portion non basculante de la membrane souple 4, et elle est très stable.

A la figure 7, une pression hydrostatique s'exerce dans le sol entourant le bassin qui a été vidé auparavant. Cette pression hydrostatique a repoussé la portion de fermeture 22 à l'écart de la paroi annulaire 12 et des ouvertures de mise en communication 14, qui sont de ce fait ouvertes. De l'eau en provenance du sol passe à travers le corps 3, par les ouvertures de mise en communication 14 ouvertes. Cette eau est ensuite collectée par la cavité formée par la gorge 30, d'où elle est ensuite évacuée vers le volet annulaire 24. La cavité comprenant la gorge 30 joue un rôle de répartition annulaire du débit d'eau. Sous la poussée de ce débit d'eau, le volet annulaire 24 est maintenu basculé à l'écart du corps 3. Un écoulement R de remplissage du bassin prend ainsi naissance dans le sol, chemine par le passage P et traverse le dispositif anti-retour de sécurité 1, avant d'aboutir dans le bassin. La membrane souple 4 est dans une configuration passante autorisant l'écoulement de remplissage R.

Depuis les ouvertures de mise en communication 14 jusqu'au passage central 18, l'écoulement de remplissage R chemine entre le corps 3 et la membrane souple 4, dans un passage annulaire. Lorsque la membrane souple 4 est dans sa configuration passante, le basculement du volet annulaire 24 à l'écart du corps 3 facilite le passage d'un important débit d'eau. Il facilite également l'évacuation de particules solides éventuellement entraînées par l'écoulement de remplissage R. Il en va de même de la cavité comprenant la gorge 30.

La cavité comprenant la gorge 30 facilite en outre l'instauration de l'écoulement de remplissage R et, lors de cette instauration, le décollement du volet annulaire 24 à l'écart du corps 3.

## Revendications

1. Dispositif anti-retour de sécurité pour un fond (F) d'un bassin dans un sol pouvant être le siège de pressions hydrostatiques susceptibles de pousser sur ce fond (F), le dispositif anti-retour de sécurité étant à même d'interdire un écoulement de fuite dans un premier sens, depuis le bassin vers le sol, et d'autoriser un écoulement de remplissage (R) dans un deuxième sens contraire au premier sens, le dispositif anti-retour de sécurité comportant :
- un corps (3) comportant des ouvertures de mise en communication (14) pour le passage de l'écoulement de remplissage (R), et
- une membrane souple (4) portée par le corps (3) et déformable, sous la poussée d'une pression hydrostatique dans le sol, depuis une configuration de fermeture, dans laquelle cette membrane souple (4) ferme de manière étanche lesdites ouverture de mise en communication (14) de manière à interdire l'écoulement de fuite, jusqu'à une configuration passante, dans laquelle l'écoulement de remplissage (R) est autorisé en traversant le corps (3) par les ouvertures de mise en communication (14),
**caractérisé en ce que** la membrane souple (4) comporte :
- un volet annulaire (24) déporté par rapport aux ouvertures de mise en communication (14) et basculant entre une position rabattue, dans laquelle ce volet annulaire (24) de la membrane souple (4) dans sa configuration d'obturation s'applique de manière étanche sur le corps (3), et une position ouverte dans laquelle le volet annulaire (24) de la membrane souple (4) dans sa configuration passante est à l'écart du corps (3), et
- une portion de fermeture (22) non basculante par rapport au corps (3), distincte du volet annulaire (24) et recouvrant les ouvertures de mise en communication (14) de manière à pouvoir fermer hermétiquement ces ouvertures de mise en communication (14), dans la configuration d'obturation, et être éloigné des ouvertures de mise en communication (14) sous la poussée de la pression hydrostatique dans le sol, dans la configuration passante,
la portion de fermeture (22) et le volet annulaire (24) faisant partie d'une même paroi sous laquelle l'écoulement de remplissage (R) peut cheminer depuis les ouvertures de communication (14) jusqu'au niveau d'un bord libre (28) du volet annulaire (24), lorsque la membrane souple (4) est dans sa configuration passante.

2. Dispositif anti-retour de sécurité selon la revendication 1, **caractérisé en ce que** le corps comporte :
- une bride de montage (10),
- une portion centrale (11) en saillie par rapport à la bride de montage (10), et
- une paroi annulaire (12) raccordant la bride de montage (10) à la portion centrale (11), cette paroi annulaire (12) étant percée des ouvertures de mise en communication (14) et étant entourée de la portion de fermeture (22) constitutive de la membrane souple (4).

3. Dispositif anti-retour de sécurité selon la revendication 2, **caractérisé en ce que** la portion de fermeture (22) est serrée élastiquement sur la paroi annulaire (12) du corps (3).

4. Dispositif anti-retour de sécurité selon l'une quelconque des revendications 2 et 3, **caractérisé en ce que**, au niveau de la portion de fermeture (22), la membrane souple (4) comporte une succession de nervures annulaires (25) de rappel élastique de cette portion de fermeture (22) vers la paroi annulaire (12) du corps (3).

5. Dispositif anti-retour de sécurité selon l'une quelconque des revendications 2 à 4, **caractérisé en ce que** le volet annulaire (24) se trouve au niveau de la portion centrale (11) du corps (3) de manière à s'étendre devant cette portion centrale (11) lorsque ce volet annulaire (24) est dans sa position rabattue.

6. Dispositif anti-retour de sécurité selon l'une quelconque des revendications 2 à 5, **caractérisé en ce que** la membrane souple (4) comporte une portion annulaire de retenue (20) qui recouvre au moins partiellement une face arrière de la bride de montage (10) de manière à être serrée entre cette bride de montage (10) et le fond (F) du bassin lorsque le dispositif anti-retour de sécurité est fixé à ce fond (F).

7. Dispositif anti-retour de sécurité selon l'une quelconque des revendications précédentes, **caractérisé en ce que** le volet annulaire (24) possède une raideur élastique se traduisant par un rappel élastique de lui-même vers sa position rabattue, le volet annulaire (24) comportant une succession de rainures (29), décalées angulairement, d'abaissement de la raideur élastique parallèlement au bord libre (28) du volet annulaire (24).

8. Dispositif anti-retour de sécurité selon l'une quelconque des revendications précédentes, **caractérisé en ce que**, entre la portion de fermeture (22) et le volet annulaire (24), la membrane souple (4) comporte une portion de plus grande flexibilité définissant une charnière annulaire (23) autour de laquelle le volet annulaire (24) est basculant.

9. Dispositif anti-retour de sécurité selon la revendication 8, **caractérisé en ce que**, au niveau de la charnière (23), la membrane souple (4) comporte au moins une zone amincie (27) de flexibilisation de la charnière (23), cette zone amincie (27) s'étendant selon une même courbe fermée que la charnière (23).

10. Dispositif anti-retour de sécurité selon l'une quelconque des revendications précédentes, **caractérisé en ce que**, en aval des ouvertures de mise en communication (14), selon le deuxième sens, le corps (3) délimite un creux (30) formant au moins une partie d'une cavité d'évacuation de l'écoulement de remplissage (R) vers le volet annulaire (24), cette cavité étant délimitée par le corps (3) et la membrane souple (4).

11. Dispositif anti-retour de sécurité selon l'une quelconque des revendications précédentes, **caractérisé en ce que** le volet annulaire (24) porte au moins une lèvre d'étanchéité annulaire (31) s'appliquant sur le corps (3) de manière étanche lorsque le volet annulaire (24) est dans sa position rabattue, cette lèvre d'étanchéité annulaire (31) longeant un bord libre (28) du volet annulaire (24).

## Patentansprüche

1. Sicherheitsrückschlagvorrichtung für einen Boden (F) eines Beckens in einem Boden, der Sitz von hydrostatischen Drücken sein kann, die imstande sind, auf diesen Boden (F) zu drücken, wobei die Sicherheitsrückschlagvorrichtung in der Lage ist, eine Leckageströmung in eine erste Richtung, von dem Becken zum Boden hin, zu unterbinden und eine Füllströmung (R) in eine zu der ersten Richtung entgegengesetzte zweite Richtung zuzulassen, wobei die Sicherheitsrückschlagvorrichtung umfasst:
- einen Körper (3) mit Verbindungsöffnungen (14) für den Durchgang der Füllströmung (R), und
- eine flexible Membran (4), die von dem Körper (3) getragen ist und unter der Schubkraft eines hydrostatischen Druckes in dem Boden von einer Schließausführung, in der diese flexible Membran (4) die Verbindungsöffnungen (14) dicht verschließt, um die Leckageströmung zu unterbinden, in eine Durchlassausfuhfung, in der die Füllströmung (R), den Körper (3) über die Verbindungsöffnungen (14) durchquerend, zugelassen wird, verformbar ist,
**dadurch gekennzeichnet, dass** die flexible Membran (4) umfasst:
- eine ringförmige Klappe (24), die gegenüber den Verbindungsöffnungen (14) versetzt ist und die zwischen einer heruntergeklappten Position, in der diese ringförmige Klappe (24) der flexiblen Membran (4) in ihrer Verschließausführung dicht an dem Körper (3) anliegt, und einer geöffneten Position, in der die ringförmige Klappe (24) der flexiblen Membran (4) in ihrer Durchlassausfuhrung von dem Körper (3) beabstandet ist, verschwenkt, und
- einen Schließabschnitt (22), der gegenüber dem Körper (3) nicht verschwenkbar ist, von der ringförmigen Klappe (24) getrennt ist und die Verbindungsöffnungen (14) bedeckt, um diese Verbindungsöffnungen (14) in der Verschließausführung hermetisch verschließen zu können und unter der Schubkraft des hydrostatischen Druckes in dem Boden in der Durchlassausführung von den Verbindungsöffnungen (14) entfernt zu sein,
wobei der Schließabschnitt (22) und die ringförmige Klappe (24) zu einer gleichen Wand gehören, unter der die Füllströmung (R) von den Verbindungsöffnungen (14) bis zum Bereich eines freien Randes (28) der ringförmigen Klappe (24) wandern kann, wenn die flexible Membran (4) sich in ihrer Durchlassausrührung befindet.

2. Sicherheitsrückschlagvorrichtung nach Anspruch 1, **dadurch gekennzeichnet, dass** der Körper umfasst:
- einen Montageflansch (10),
einen gegenüber dem Montageflansch (10) vorspringenden mittleren Abschnitt (11), und
- eine ringförmige Wand (12), die den Montageflansch (10) mit dem mittleren Abschnitt (11) verbindet, wobei diese ringförmige Wand (12) von den Verbindungsöffnungen (14) durchbrochen ist und von dem Schließabschnitt (22), welcher Bestandteil der flexiblen Membran (4) ist, umgeben ist.

3. Sicherheitsrückschlagvorrichtung nach Anspruch 2, **dadurch gekennzeichnet, dass** der Schließabschnitt (22) elastisch an die ringförmigen Wand (12) des Körpers (3) angedrückt ist.

4. Sicherheitsrückschlagvorrichtung nach einem der Ansprüche 2 und 3, **dadurch gekennzeichnet, dass** die flexible Membran (4) im Bereich des Schließabschnittes (22) eine Folge von ringförmigen Rippen (25) zum elastischen Rückstellen dieses Schließabschnittes (22) in Richtung der ringförmigen Wand (12) des Körpers (3) umfasst.

5. Sicherheitsrückschlagvorrichtung nach einem der Ansprüche 2 bis 4, **dadurch gekennzeichnet, dass** die ringförmige Klappe (24) sich im Bereich des mittleren Abschnitts (11) des Körpers (3) befindet, so dass sie sich vor diesem mittleren Abschnitt (11) erstreckt, wenn diese ringförmige Klappe (24) sich in ihrer heruntergeklappten Position befindet.

6. Sicherheitsrückschlagvorrichtung nach einem der Ansprüche 2 bis 5, **dadurch gekennzeichnet, dass** die flexible Membran (4) einen ringförmigen Halteabschnitt (20) umfasst, der eine Rückseite des Montageflansches (10) wenigstens teilweise bedeckt, so dass er zwischen diesem Montageflansch (10) und dem Boden (F) des Beckens festgeklemmt ist, wenn die Sicherheitsrückschlagvorrichung an diesem Boden (F) befestigt ist.

7. Sicherheitsrückschlagvorrichtung nach einem der vorhergehenden Ansprüche, **dadurch gekennzeichnet, dass** die ringförmige Klappe (24) eine elastische Steifigkeit aufweist, die durch ein elastisches Rückstellen ihrer selbst in Richtung ihrer heruntergeklappten Position zum Ausdruck kommt, wobei die ringförmige Klappe (24) eine Folge von winkelmäßig versetzten Nuten (29) zur Minderung der elastischen Steifigkeit parallel zum freien Rand (28) der ringförmigen Klappe (24) umfasst.

8. Sicherheitsrückschlagvorrichtung nach einem der vorhergehenden Ansprüche, **dadurch gekennzeichnet, dass** die flexible Membran (4) zwischen dem Schließabschnitt (22) und der ringförmigen Klappe (24) einen Abschnitt mit größerer Flexibilität aufweist, der ein ringförmiges Scharnier (23) definiert, um das herum die ringförmige Klappe (24) schwenkbar ist.

9. Sicherheitstückschlagvorrichtung nach Anspruch 8, **dadurch gekennzeichnet, dass** die flexible Membran (4) im Bereich des Scharniers (23) wenigstens einen verdünnten Bereich (27) zur Flexibilisierung des Scharnieres (23) uxnfasst, wobei dieser verdünnte Bereich (27) sich entlang einer gleichen geschlossenen Kurve wie das Scharnier (23) erstreckt.

10. Sicherheitsrückschlagvorrichtung nach einem der vorhergehenden Ansprüche, **dadurch gekennzeichnet, dass** nach den Verbindungsöffnungen (14), in der zweiten Richtung, der Körper (3) eine Vertiefung (30) begrenzet, die wenigstens einen Teil eines Hohlraums zum Abführen der Füllströmung (R) in Richtung der ringförmigen Klappe (24) bildet, wobei dieser Hohlraum durch den Körper (3) und die flexible Membran (4) begrenzt ist.

11. Sicherheitsrückschlagvorrichtung nach einem der vorhergehenden Ansprüche, **dadurch gekennzeichnet, dass** die ringförmige Klappe (24) wenigstens eine ringförmige Dichtungslippe (31) trägt, die an dem Körper (3) dicht anliegt, wenn die ringförmigen Klappe (24) sich in ihrer heruntergeklappten Position befindet, wobei diese ringförmige Dichtungslippe (31) an einem freien Rand (28) der ringförmigen Klappe (24) entlangläuft.

## Claims

1. A safety anti-reversing device for a bottom of a basin in a ground comprising:
- a body comprising communicating openings for passage of a liquid, and
- a flexible membrane supported by the body and deformable, from a closed configuration in which the flexible membrane closes said communicating openings in tight manner so as to prevent leakage flow from the basin to the ground, to a pass-through configuration in which a filling flow of the liquid toward the basin is enabled passing through the body via the communicating openings,
wherein the flexible membrane comprises:
- an annular shutter offset with respect to the communicating openings and swivelling between a closed-off position in which the annular shutter is applied in tight manner on the body, and an open position in which the annular shutter is away from the body, the closed-off position of the annular shutter corresponding to the sealed-off configuration of the flexible membrane, and the open position corresponding to the pass-through configuration of the flexible membrane, and
- a closing portion that does not swivel with respect to the body, distinct from the annular shutter and covering the communicating openings so as to be able to hermetically close the communicating openings, in the sealed-off configuration, and to be moved away from the communicating openings by a thrust force of the liquid from the ground to the basin in the pass-through configuration,
the closing portion and the annular shutter forming part of the same wall under which the filling flow of the liquid can pass from the communicating openings to a level of a free edge of the annular shutter, when the flexible membrane is in the pass-through configuration.

2. The safety anti-reversing device according to claim 1, **characterized in that** the body comprises:
- a mounting flange,
- a central portion salient with respect to the mounting flange, and
- an annular wall connecting the mounting flange to the central portion, communicating openings being drilled in this annular wall which is surrounded by the closing portion constituting the flexible membrane.

3. The safety anti-reversing device according to claim 2, **characterized in that** the closing portion is flexibly clamped onto the annular wall of the body.

4. The safety anti-reversing device according to any one of claims 2 or 3, **characterized in that**, at the level of the closing portion, the flexible membrane comprises a succession of annular ribs for flexible biasing of this closing portion towards the annular wall of the body.

5. The safety anti-reversing device according to any one of claims 2 to 4, **characterized in that** the annular shutter is located at the level of the central portion of the body so as to extend in front of this central portion when this annular shutter is down in its sealing position.

6. The safety anti-reversing device according to any one of claims 2 to 5, wherein the flexible membrane comprises an annular securing portion which at least partially covers a rear surface of the mounting flange so as to be clamped between the mounting flange and the bottom of the basin when the safety anti-reversing device is fixed to this bottom.

7. The safety anti-reversing device according to any one of the foregoing claims, **characterized in that** the annular shutter has a flexible stiffness resulting in flexible biasing by itself to its sealing position, the annular shutter comprising a succession of angularly offset grooves for reducing the flexible stiffness in a direction parallel to the free edge of the annular shutter.

8. The safety anti-reversing device according to any one of the foregoing claims, **characterized in that**, between the closing portion and the annular shutter, the flexible membrane comprises a portion of greater flexibility defining an annular hinge around which the annular shutter is swivel-mounted.

9. The safety anti-reversing device according to claim 8, **characterized in that**, at the level of the annular hinge, the flexible membrane comprises at least one thinned area to enhance the flexibility of the annular hinge, the thinned area extending along the same closed curve as the annular hinge.

10. The safety anti-reversing device according to any one of the foregoing claims, **characterized in that**, downstream from the communicating openings, from the ground to the basin, the body delineates a groove forming at least a part of a cavity for removal of a filling flow to the annular shutter, the cavity being delineated by the body and the flexible membrane.

11. The safety anti-reversing device according to any one of the foregoing claims, **characterized in that** the annular shutter is provided with at least one annular sealing lip that is applied in tight manner on the body when the annular shutter is in its sealed position, the annular sealing lip running along a free edge of the annular shutter.
